# DEMANDE DE BREVET EUROPEEN

(11) **EP 1 475 908 A1**
(43) Date de publication de la demande: **10.11.2004**
(21) Numéro de dépôt: 04291037.2
(22) Date de dépôt: 21.04.2004
(51) Int. Cl.: H04B 10/17

(54) **Procédé et dispositif d'amplification raman distribuée dans une fibre optique, par des signaux optiques de longueurs d'onde et polarisations differentes**

(30) Priorité: 06.05.2003 FR 0305479
(71) Demandeur: ALCATEL, 75008 Paris (FR)
(72) Inventeur: Brandon, Eric, 75015 Paris (FR); Labrunie, Laurent, 75002 Paris (FR)
(74) Mandataire: Sciaux, Edmond

(57) **Abrégé**

Un dispositif d'amplification de signaux optiques (D) est raccordé à une fibre optique (3), dans laquelle circule un signal optique de données, et est chargé de délivrer dans cette fibre optique des premier et deuxième signaux optiques de pompe présentant des longueurs d'onde différentes permettant d'amplifier, par diffusion Raman stimulée, le signal de données. Chacun des signaux de pompe comprend deux composantes de signal de pompe dont les polarisations sont orthogonales entre elles. Par ailleurs, le dispositif d'amplification D comporte un module de commande 14 pour délivrer en alternance un premier signal de pompe combiné et un deuxième signal de pompe combiné, le premier signal de pompe combiné comprenant une composante du premier signal de pompe et une composante du deuxième signal de pompe, qui sont polarisées orthogonalement entre elles, et le deuxième signal de pompe combiné comportant l'autre composante du premier signal de pompe et l'autre composante du deuxième signal de pompe.

## Description

L'invention concerne le domaine de la transmission de signaux optiques, et plus particulièrement celui de l'amplification par effet Raman distribué de signaux circulant dans une fibre optique.

L'amplification par effet Raman distribué est une technique bien connue permettant d'amplifier in situ des signaux optiques (de données) qui circulent dans une fibre optique, par exemple entre des stations d'émission et de réception distantes. Elle consiste, dans l'une de ses mises en oeuvre, à faire circuler dans une fibre optique, selon un mode co-propagatif ou contra-propagatif par rapport aux signaux à amplifier, des premier et deuxième signaux de pompe présentant des première et deuxième longueurs d'onde inférieures à celles des signaux de données et de nature à induire, par diffusion Raman stimulée de premier ordre (ou « first order SRS »), la conversion d'une partie de leur puissance (ou « puissance de pompe ») au profit des signaux de données.

Lorsque deux signaux de pompe sont ainsi utilisés dans une fibre optique, ils peuvent amplifier un signal de données, notamment à multiplexage en longueurs d'onde, dont les longueurs d'onde sont comprises dans un intervalle d'environ 30 nanomètres (nm). Un intervalle encore supérieur peut être envisagé lorsque l'on utilise plus de deux signaux de pompe de longueurs d'onde différentes.

Or, comme le sait l'homme de l'art, l'efficacité de l'amplification Raman distribuée sur toute la longueur de la fibre est réduite du fait de la diffusion Raman stimulée entre les signaux de pompe qui appauvrit les niveaux d'énergie associés aux petites longueurs d'onde au profit des niveaux d'énergie associés aux grandes longueurs d'onde. Cette diminution de l'efficacité est encore accentuée par l'atténuation intrinsèque des fibres optiques (plus particulièrement aux longueurs d'ondes des signaux de pompe) qui diminue la distance d'interaction entre les signaux de pompe et les signaux de données.

Parmi les solutions proposées pour remédier à l'inconvénient précité, l'une d'entre elles consiste à moduler l'injection, dans la fibre optique, des signaux de pompe de sorte qu'ils ne puissent pas interagir les uns avec les autres. Il est en outre possible d'injecter dans la fibre optique un signal de pompe suplémentaire présentant une troisième longueur d'onde, circulant soit à contre-courant du signal de données, soit dans le même sens que lui, et destiné à amplifier, par diffusion Raman stimulée de deuxième ordre, les deux autres signaux de pompe.

Cette solution est certes intéressante, mais elle repose sur l'utilisation de signaux de pompe non polarisés, délivrés, par exemple, par des lasers Raman à fibre. Or, ces lasers, bien que permettant de respecter la durée moyenne d'amplification Raman, ne permettent pas d'obtenir une efficacité d'amplification suffisante pendant les courts instants où ils ne sont pas autorisés à délivrer leurs signaux de pompe.

L'invention a donc pour but d'améliorer la situation.

Elle propose à cet effet un procédé dédié à l'amplification optique par diffusion Raman stimulée de premier ordre, de la puissance de signaux optiques de données circulant selon un sens choisi dans une fibre optique, cette amlification utilisant deux signaux optiques de pompe de longueurs d'onde différentes.

Ce procédé se caractérise par le fait que : on prévoit un premier signal optique de pompe comportant deux composantes présentant respectivement une première et deuxième polarisations orthogonales entre elles ; on prévoit un deuxième signal optique de pompe comportant deux composantes présentant respectivement la première et la deuxième polarisations ; et on injecte en alternance dans la fibre optique un premier signal de pompe combiné et un deuxième signal de pompe combiné, le premier signal de pompe combiné comprenant une composante du premier signal optique de pompe et une composante du deuxième signal optique de pompe qui sont polarisées orthogonalement entre elles, et le deuxième signal optique de pompe combiné comportant l'autre composante du premier signal optique de pompe et l'autre composante du deuxième signal optique de pompe.

Ainsi, les deux longueurs d'onde de pompe coexistent simultanément et en permanence au sein de la fibre optique, sans interagir l'une avec l'autre du fait de leurs polarisations orthogonales.

Préférentiellement, les durées d'injection des premier et deuxième signaux de pompe sont sensiblement égales.

Par ailleurs, l'injection en alternance s'effectue préférentiellement selon une fréquence supérieure ou égale au kilohertz afin de ne pas altérer le trafic au sein de la fibre optique.

En outre, les signaux de pompe combinés circulent préférentiellement à contre-courant des signaux de données.

L'invention porte également sur un dispositif d'amplification de signaux optiques susceptible de fournir pour une fibre optique, dans laquelle circulent un signal optique de données, un premier et un deuxième signal de pompe présentant des longueurs d'onde propres à amplifier, par diffusion Raman stimulée de premier ordre, le signal optique de données.

Le dispositif se caractérise par un module d'alimentation pour fournir deux composantes du premier signal de pompe présentant une première et deuxième polarisations, orthogonales entre elles, et pour fournir deux composantes du deuxième signal de pompe présentant ladite première et ladite deuxième polarisartions ; et un module de commande agencé pour délivrer en alternance dans la fibre optique un premier signal de pompe combiné et un deuxième signal de pompe combiné, le premier signal de pompe combiné comprenant une composante du premier signal de pompe et une composante du deuxième signal de pompe, qui sont polarisées orthoganement entre elles, et le deuxième signal de pompe combiné comportant l'autre composante du premier signal optique de pompe et l'autre composante du deuxième signal de pompe.

Préférentiellement, le module de commande est agencé de manière à délivrer les signaux de pompe combinés pendant des durées sensiblement égales.

Par ailleurs, le module de commande est préférentiellement agencé pour délivrer en alternance les signaux de pompe selon une fréquence supérieure ou égale au kilohertz.

En outre, le dispositif est préférentiellement agencé de manière à délivrer les signaux de pompe combinés à contre-courant des signaux de données.

Egalement de préférence, le module d'alimentationest de type à diodes, propres à délivrer des signaux de pompe présentant des polarisations rectilignes.

Selon un mode avantageux de réalisation, le dispositif d'amplification de signaux optiques comprend :
- un premier multiplexeur de polarisation destiné à être alimenté en continu par les modules d'alimentation fournissant les deux composantes du premier signal de pompe, ledit premier multiplexeur de polarisation étant agencé pour combiner lesdites composantes du premier signal de pompe pour délivrer alternativement sur une sortie, sur ordre dudit module de commande, l'une ou l'autre desdites composantes du premier signal de pompe,
- un deuxième multiplexeur de polarisation destiné à être alimenté en continu par les modules d'alimentation fournissant les deux composantes du deuxième signal de pompe, ledit deuxième multiplexeur de polarisation étant agencé pour combiner lesdites composantes du deuxième signal de pompe pour délivrer alternativement sur une sortie, sur ordre dudit module de commande, l'une ou l'autre desdites composantes du deuxième signal de pompe,
- un multiplexeur en longueur d'onde agencé pour combiner les composantes de signal de pompe délivrés sur les sorties desdits premier et deuxième multiplexeurs de polarisation.

Selon qu'il n'est pas intégré, ou qu'il est intégré, dans une station d'émission ou de réception couplée à une fibre optique, le dispositif selon l'invention comporte, ou ne comporte pas, un coupleur pour injecter les première et deuxième signaux de pompe dans la fibre optique.

L'invention porte en outre sur une station d'émission équipée d'un dispositif du type de celui présenté ci-avant, et sur une station de réception équipée d'un dispositif du type de celui présenté ci-avant.

Le procédé, le dispositif et les stations d'émission et de réception selon l'invention trouvent une application particulièrement intéressante, bien que non exclusive, dans le domaine des télécommunications, et plus particulièrement encore dans le domaine des systèmes de transmission avec ou sans amplificateur optique (comme par exemple un répéteur).

D'autres caractéristiques et avantages de l'invention apparaîtront à l'examen de la description détaillée ci-après, et des dessins annexés, sur lesquels :
- la figure 1 illustre de façon schématique un premier mode de réalisation de dispositif selon l'invention, adapté à un premier type d'installation de transmission d'un signal optique de données,
- la figure 2 détaille le premier mode de réalisation du dispositif de la figure 1,
- la figure 3 illustre de façon schématique un deuxième mode de réalisation de dispositif selon l'invention, adapté à un deuxième type d'installation de transmission d'un signal optique de données, et
- la figure 4 illustre sous forme de chronogrammes superposés un exemple de combinaison, selon l'invention, de quatre types de composantes de signaux de pompe.

Les dessins annexés pourront non seulement servir à compléter l'invention, mais aussi contribuer à sa définition, le cas échéant.

L'invention est dédiée à l'amplification de signaux de données, circulant dans une fibre optique, par diffusion Raman stimulée de premier ordre (ou « first order SRS ») à l'aide de signaux de pompe présentant des longueurs d'onde différentes.

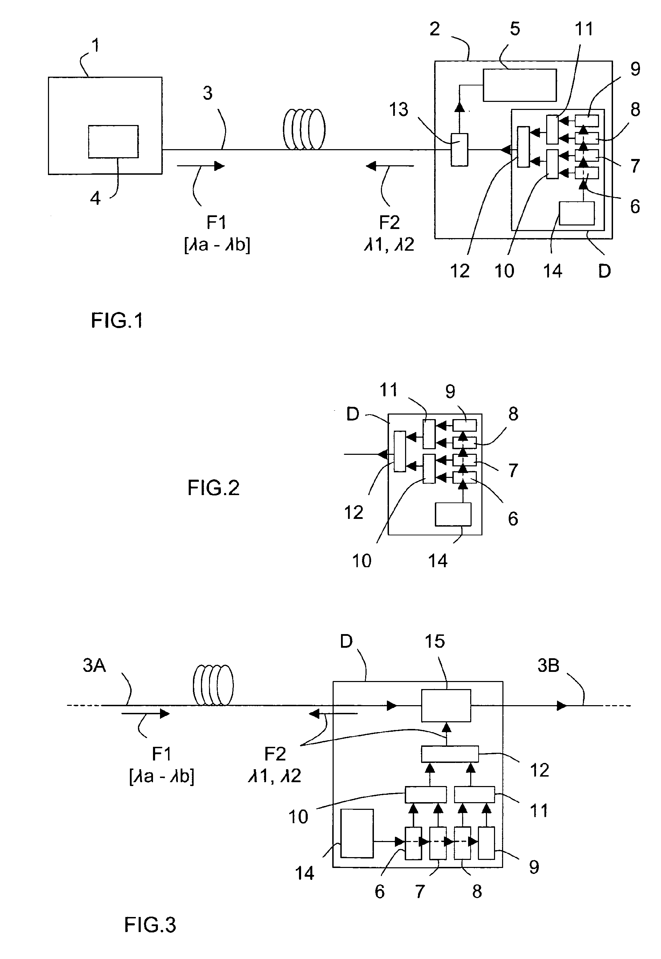

On se réfère tout d'abord aux figures 1 et 2 pour décrire un dispositif d'amplification D, selon l'invention, équipant une installation, par exemple de télécommunications, adaptée à la transmission d'un signal optique de données sans amplificateur optique (répéteur ou régénérateur de signal (par exemple de type 3R)). Une telle installation peut être, par exemple, utilisée dans le cadre de transmissions sous-marines ou terrestres.

L'installation comporte ici une station de transmission de signaux optiques 1 raccordée à une station distante de réception d'un signal optique 2, via une fibre optique 3.

La station de transmission 1 comporte un module de transmission 4 pour délivrer dans la fibre optique 3 un signal optique de données, représentatif de données à transmettre et présentant des longueurs d'onde comprises dans un intervalle choisi [λa *-* λb]. Par exemple, le signal de données émis, de type à multiplexage en longueurs d'onde, est compris dans l'intervalle [1545 nm - 1560 nm] ou [1530 nm - 1562 nm].

Une fois introduit dans la fibre optique 3, le signal de données se propage en direction de la station de réception 2 (selon la flèche F1). Celle-ci possède un module de réception 5 pour analyser le signal de données reçu en vue de son utilisation ou de son relais vers une ou plusieurs autres stations de l'installation.

Dans cet exemple de réalisation, la station de réception 2 est équipée d'un dispositif d'amplification de signaux D, selon l'invention, pour amplifier le signal de données, si possible de façon homogène sur une longueur importante, par exemple de plusieurs dizaines de kilomètres, de la fibre optique 3 (on parle alors d'amplification distribuée).

Le dispositif d'amplification D comporte, tout d'abord, un module d'alimentation constitué, ici, de quatre sous-modules 6 à 9.

Le premier sous-module 6 est agencé pour délivrer un premier signal de pompe S11 de longueur d'onde λ1, inférieure aux longueurs d'onde [λa - λb] du signal de données, et une polarisation préférentiellement rectiligne.

Le deuxième sous-module 7 est agencé pour délivrer un premier signal de pompe S12 de longueur d'onde λ1 et une polarisation préférentiellement rectiligne.

Le troisième sous-module 8 est agencé pour délivrer un deuxième signal de pompe S21 de longueur d'onde λ2, inférieure aux longueurs d'onde [*λ*a*-*λb] du signal de données, mais supérieure à celle (λ1) du premier signal de pompe, et une polarisation préférentiellement rectiligne.

Le quatrième sous-module 9 est agencé pour délivrer un deuxième signal de pompe S22 de longueur d'onde λ2 et une polarisation préférentiellement rectiligne.

Les longueurs d'onde λ1 et λ2 sont choisies de manière à optimiser le couplage entre les signaux de pompe et le signal de données dans la fibre optique 3. On entend ici par « optimiser le couplage », le fait d'induire une amplification optimale du signal de données par diffusion Raman stimulée de premier ordre. Ce mécanisme d'amplification de premier ordre est notamment décrit dans le document de Aoki « Properties of fiber Raman amplifier and their applicability to digital optical communication systems », Journal of lightwave technology, july 1988, Vol 6, n°7.

Par exemple, lorsque les longueurs d'onde [λa - λb] des signaux de données sont sensiblement comprises dans l'intervalle [1530 nm - 1562 nm], les signaux de pompe peuvent présenter des longueurs d'onde λ1 et λ2 respectivement égales à environ 1425 nm et 1455 nm.

Préférentiellement chaque sous-module 6 à 9 est équipé d'une diode (non représentée) délivrant une lumière source de longueur d'onde λ1 ou λ2. Préférentiellement, ces diodes sont des diodes laser classiques, à semiconducteur, du même type que celles utilisées pour l'amplification à l'aide de fibres dopées (par exemple erbium).

Le premier sous-module 6 et le deuxième sous-module 7 sont couplés à un premier multiplexeur de polarisation (ou combineur de polarisation) 10, que comprend le dispositif d'amplification D, de manière à l'alimenter avec les deux composantes S11 et S12 du premier signal de pompe de longueur d'onde λ1. De même, le troisième sous-module 8 et le quatrième sous-module 9 sont couplés à un deuxième multiplexeur de polarisation (ou combineur de polarisation) 11, que comprend le dispositif d'amplification D, de manière à l'alimenter avec les deux composantes S21 et S22 du deuxième signal de pompe de longueur d'onde λ2.

Le premier multiplexeur de polarisation 10 est agencé pour combiner les composantes du premier signal de pompe délivrées par le premier et le deuxième sous-module 6 et 7, de manière à délivrer sur une sortie la composante S11 présentant une première polarisation choisie et la composante S12 présentant une deuxième polarisation, perpendiculaire à la première polarisation choisie.

De même, le deuxième multiplexeur de polarisation 11 est agencé pour combiner les composantes du deuxième signal de pompe délivrés par le troisième et le quatrième sous-module 8 et 9, de manière à délivrer sur une sortie la composante S21 présentant la première polarisation choisie et la composante S22 présentant la deuxième polarisation, perpendiculaire à la première polarisation choisie.

Les sorties des multiplexeurs de polarisation 10 et 11 alimentent en signaux de pompe polarisés orthogonalement un multiplexeur en longueur d'onde 12 du dispositif d'amplification D.

Ce multiplexeur en longueur d'onde 12 comporte une sortie qui alimente, ici, un dispositif d'aiguillage 13 de la station de réception 2, tel qu'un circulateur optique, également raccordé à la fibre 3 et au module de réception 5 (ou à un amplificateur lorsqu'un tel élément est prévu).

Le dispositif d'amplification D comprend en outre un module de commande 14 agencé de manière à délivrer par le multiplexeur de longueur d'onde 12, en alternance, un signal de pompe combiné formé de la composante S11 du premier signal de pompe présentant la première polarisation et de la composante S22 du deuxième signal de pompe présentant la deuxième polarisation, et d'un autre signal de pompe combiné formé de la composante S12 du premier signal de pompe présentant la deuxième polarisation et de la composante S21 du deuxième signal de pompe présentant la première polarisation.

Pour ce faire, au moins deux solutions peuvent être envisagées. Une première solution, illustrée sur les figures 1 et 2, consiste à piloter les quatre sous-modules 6 à 9 du dispositif d'amplification D à l'aide du module de commande 14.

Plus précisément, le module de commande 14 est configuré de manière à moduler les puissances respectives des quatre sous-modules 6 à 9 de sorte qu'ils délivrent en alternance les signaux de pompes combinés.

Par conséquent, le premier multiplexeur de polarisation 10 est alimenté en alternance, par exemple, soit par le premier sous-module 6 avec la composante S11 du premier signal de pompe, soit par le deuxième sous-module 7 avec la composante S12 du premier signal de pompe, tandis que dans le même temps le deuxième multiplexeur de polarisation 11 est alimenté en alternance, par exemple, soit par le troisième sous-module 8 avec la composante S21 du deuxième signal de pompe, soit par le quatrième sous-module 9 avec la composante S22 du deuxième signal de pompe.

Ici, les multiplexeurs de polarisation 10 et 11 sont des éléments de type passif.

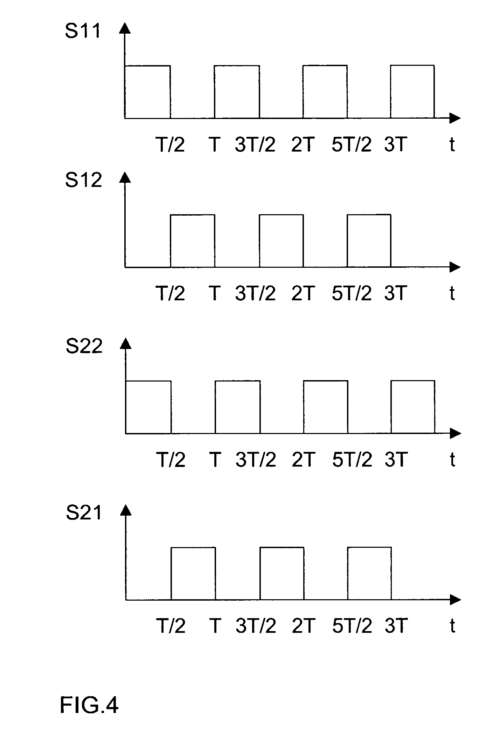

Préférentiellement, les multiplexeurs de polarisation 10 et 11 délivrent leurs signaux de façon synchrone. Par conséquent, les fréquences d'alternance des signaux délivrés par les multiplexeurs de polarisation 10 et 11 sont sensiblement identiques. Un exemple de combinaison de chronogrammes pour les composantes des signaux de pompes, délivrés par les multiplexeurs de polarisation 10 et 11, est illustré sur la figure 4.

Dans cet exemple d'alternance périodique, de période T, pendant une première durée [0, T/2], égale à une demi-période T/2, les multiplexeurs de polarisation 10 et 11 délivrent sensiblement simultanément, et respectivement, la composante S11 du premier signal de pompe présentant la première polarisation et la composante S22 du deuxième signal de pompe présentant la deuxième polarisation. Puis, pendant une deuxième durée [T/2, T], égale à une demi-période T/2, les multiplexeurs de polarisation 10 et 11 délivrent sensiblement simultanément, et respectivement, la composante S12 du premier signal de pompe présentant la deuxième polarisation et la composante S21 du deuxième signal de pompe présentant la première polarisation. Puis, pendant une troisième durée [T, 3T/2], égale à une demi-période T/2, les multiplexeurs de polarisation 10 et 11 délivrent de nouveau, sensiblement simultanément, les mêmes composantes de signaux de pompe que ceux délivrés pendant la première durée. Puis, pendant une quatrième durée [3T/2, 2T], égale à une demi-période T/2, les multiplexeurs de polarisation 10 et 11 délivrent de nouveau, sensiblement simultanément, les mêmes composantes de signaux de pompe que ceux délivrés pendant la deuxième durée. Le fonctionnement du dispositif D se poursuit ainsi périodiquement.

Lors de chaque première demi-période de durée T/2 le multiplexeur en longueur d'onde 12 est donc alimenté par les multiplexeurs de polarisation 10 et 11 en composantes de signaux de pompe S11 et S22, de sorte qu'il peut les combiner et délivrer sur sa sortie un premier signal de pompe combiné représentant la superposition des composantes S11 et S22. De même, lors de chaque deuxième demi-période de durée T/2 le multiplexeur en longueur d'onde 12 est alimenté par les multiplexeurs de polarisation 10 et 11 en composantes de signaux de pompe S12 et S21, de sorte qu'il peut les combiner et délivrer sur sa sortie un deuxième signal de pompe combiné représentant la superposition des composantes S12 et S21.

Le multiplexeur en longueur d'onde 12 peut ainsi alimenter la fibre optique 3 en alternance, via le circulateur 13, soit avec le premier signal de pompe combiné, soit avec le deuxième signal de pompe combiné. De la sorte, les deux longueurs d'onde de pompage λ1 et λ2 peuvent coexister simultanément et en permanence au sein de la fibre optique 3, sans interagir l'une avec l'autre en raison de leurs polarisations orthogonales. En d'autres termes, il n'existe pas, ou quasiment pas, de dépeuplement (ou déplétion) des niveaux d'énergie élevés, associés à la longueur d'onde λ1, au profit des niveaux d'énergie moins élevés, associés à la longueur d'onde λ2.

L'injection par le circulateur 13 des premiers et deuxième signaux de pompe combinés s'effectue à contre courant des signaux de données (mode contra-propagatif - flèche F2 de la figure 1) du fait que le dispositif d'amplification D est implanté dans la station de réception 2.

Il est important de noter que d'autres combinaisons de chronogrammes peuvent être envisagées. Ainsi, on peut envisager que chaque période T soit décomposée en deux portions de durées différentes. On peut également envisager un recouvrement d'impulsions lorsque l'électronique de commande n'est pas suffisamment rapide, ou bien l'emploi d'impulsions de durée inférieure à la demie-période afin de minimiser les interactions entre pompes, ou encore une profondeur de modulation inférieure à 100% afin d'éviter d'éteindre complètement les diodes laser.

Afin de ne pas altérer le trafic au sein de la fibre optique 3, l'alternance s'effectue préférentiellement selon une fréquence supérieure ou égale au kilohertz, et plus préférentiellement encore de l'ordre de 500kHz.

Une deuxième solution (non représentée) consiste à alimenter en continu les multiplexeurs de polarisation 10 et 11 avec les différentes composantes de signaux de pompe délivrés par les quatre sous-modules 6 à 9. Les multiplexeurs de polarisation 10 et 11 sont alors de type actif et pilotés conjointement par le module de commande 14 de manière à délivrer alternativement, et en opposition, des composantes de signal de pompe présentant soit la première polarisation, soit la deuxième polarisation.

Plus précisément, le premier multiplexeur de polarisation 10 est chargé de délivrer en alternance une composante S11 du premier signal de pompe présentant la première polarisation et une composante S12 du premier signal de pompe présentant la deuxième polarisation, tandis que le deuxième multiplexeur de polarisation 11 est chargé de délivrer en alternance une composante S22 du deuxième signal de pompe présentant la deuxième polarisation et une composante S2I du deuxième signal de pompe présentant la première polarisation .

Le reste du fonctionnement du dispositif d'amplification D est similaire à celui décrit précédemment en référence aux figures 1, 2 et 4.

On se réfère maintenant à la figure 3 pour décrire un autre mode de réalisation d'un dispositif d'amplification D, selon l'invention. Ici, le dispositif d'amplification D est destiné à équiper une installation, par exemple de télécommunications, adaptée à la transmission de signaux optiques de données avec amplificateur optique (répéteur ou régénérateur de signal (par exemple de type 3R)). Une telle installation peut être, par exemple, utilisée dans le cadre de transmissions sous-marines ou terrestres.

L'installation n'est ici matérialisée que par les deux portions de fibre optique 3A et 3B, qui sont éventuellement raccordées à des stations d'émission 1 ou de réception 2.

Ici, le dispositif D reprend l'agencement de celui décrit précédemment en référence aux figures 1 et 2, et comporte en complément un coupleur 15 permettant de coupler le dispositif D à deux portions 3A et 3B de la fibre optique, lesquelles sont raccordées à d'autres dispositifs d'amplification D ou à des stations d'émission et/ou de réception (éventuellement équipées d'un dispositif d'amplification D).

Le coupleur 15 est également raccordé au multiplexeur de longueur d'onde 12 qui l'alimente en composantes de signaux de pompe. En d'autres termes, le coupleur 15 joue partiellement le rôle du circulateur 13 de la figure 1.

Le fonctionnement de ce dispositif d'amplification D est similaire à celui décrit précédemment en référence à la figure 1.

Par ailleurs, la variante de dispositif d'amplification D (non représentée), dans laquelle les multiplexeurs de polarisation sont de type actif, s'applique également ici.

Il est important de noter que le dispositif d'amplification D, selon l'invention, peut être agencé de manière à délivrer des combinaisons de signaux de pompe comportant plus de deux longueurs d'onde différentes, par exemple trois, afin d'amplifier des signaux de données large bande.

Dans ce cas, on détermine les deux longueurs d'onde qui sont susceptibles d'interagir le plus fortement du fait de la diffusion Raman stimulée, et l'on applique l'alternance décrite ci-avant sur les signaux deuxièmes présentant ces deux longueurs d'onde. Les signaux de pompe présentant la troisième longueur d'onde et interagissant moins fortement avec les deux autres signaux de pompe alimentent alors en continu le multiplexeur en longueur d'onde 12.

L'invention offre également un procédé dédié à l'amplification optique par diffusion Raman stimulée de premier ordre, d'un signal optique de données circulant selon un sens choisi dans une fibre optique 3, à l'aide de deux signaux de pompe présentant des longueurs d'onde différentes

Ce procédé peut être mis en oeuvre à l'aide de l'une des installations présentées ci-avant ou de l'un des dispositifs d'amplification D, qu'il soit implanté dans une station de réception 2 ou dans une station d'émission 1, ou bien qu'il équipe directement une fibre optique 3. Les fonctions et sous-fonctions principales et optionnelles assurées par les étapes de ce procédé étant sensiblement identiques à celles assurées par les différents moyens constituants le dispositif d'amplification D, seules seront résumées ci-après les étapes mettant en oeuvre les fonctions principales du procédé selon l'invention.

Ce procédé consiste, d'une part, en ce que chacun d'un premier signal de pompe et d'un deuxième signal de pompe présente deux composantes de signal de pompe dont les polarisations sont orthogonales entre elles, et d'autre part, en ce que l'amplification s'effectue par une alternance, d'un premier signal de pompe combiné et d'un deuxième signal de pompe combiné, le premier signal de pompe combiné étant formé par une composante S11 du premier signal de pompe présentant la première polarisation et une composante S22 du deuxième signal de pompe présentant la deuxième polarisation, et le deuxième signal de pompe combiné étant formé par une composante S12 du premier signal de pompe présentant la deuxième polarisation et une composante S21 du deuxième signal de pompe présentant la première polarisation.

L'invention ne se limite pas aux modes de réalisation de procédé, de dispositif et de station décrits ci-avant, seulement à titre d'exemple, mais elle englobe toutes les variantes que pourra envisager l'homme de l'art dans le cadre des revendications ci-après.

## Revendications

1. Procédé d'amplification optique de signaux au sein d'une fibre optique (3), dans lequel on procède à l'amplification dans ladite fibre, par diffusion Raman stimulée, d'un signal optique de données ([λa - λb]) circulant selon un sens choisi dans ladite fibre optique (3), par un premier signal optique de pompe et un deuxième signal de pompe, les signaux de pompe ayant des longueurs d'onde différentes, **caractérisé en ce que** :
- on prévoit un premier signal optique de pompe comportant deux composantes (S11, S12) présentant respectivement une première et une deuxième polarisations, orthogonales entre elles,
- on prévoit un deuxième signal optique de pompe comportant deux composantes (S21, S22) présentant respectivement la première et la deuxième polarisations, et
- on injecte, en alternance, dans la fibre optique un premier signal de pompe combiné et un deuxième signal de pompe combiné, le premier signal de pompe combiné comprenant une composante (S11) du premier signal de pompe et une composante (S22) du deuxième signal de pompe qui sont polarisées orthogonalement entre elles, et le deuxième signal de pompe combiné comportant l'autre composante (S12) du premier signal de pompe et l'autre composante (S21) du deuxième signal de pompe.

2. Procédé selon la revendication 1, **caractérisé en ce qu'**on injecte en alternance les signaux de pompe combinés pendant des durées sensiblement égales.

3. Procédé selon l'une des revendications 1 et 2, **caractérisé en ce qu'**on alterne les signaux de pompe combinés selon une fréquence supérieure ou égale au kilohertz.

4. Procédé selon la revendication 3, **caractérisé en ce qu'**on utilise une fréquence d'alterrnance de l'ordre de 500 kilohertz.

5. Procédé selon l'une des revendications 1 à 4, **caractérisé en ce que** lesdits signaux de pompe combinés (S11+S22, S12+S21) circulent à contre-courant desdits signaux de données.

6. Dispositif (D) d'amplification de signaux optiques de données destiné à fournir un premier signal de pompe et un deuxième signal de pompe propres à amplifier, par diffusion Raman stimulée, un signal de données ([λa - λb]) circulant dans une fibre optique (3), **caractérisé en ce qu'**il comprend :
- des sous-modules d'alimentation (6, 7) pour fournir deux composantes (S11, S12) du premier signal de pompe, présentant respectivement une première et une deuxième polarisations, orthogonales entre elles,
- des sous-modules d'alimentation (8, 9) pour fournir deux composantes (S21, S22) du deuxième signal de pompe, présentant respectivement la première et la deuxième polarisations, et
- un module de commande (14) agencé pour délivrer en alternance dans la fibre optique un premier signal de pompe combiné et un deuxième signal de pompe combiné, le premier signal de pompe combiné comprenant une composante (S11) du premier signal de pompe et une composante (S22) du deuxième signal de pompe qui sont polarisées orthogonalement entre elles, et le deuxième signal de pompe combiné comportant l'autre composante (S12) du premier signal de pompe et l'autre composante (S21) du deuxième signal de pompe.

7. Dispositif selon la revendication 6, **caractérisé en ce que** ledit module de commande (14) est agencé pour délivrer en alternance les signaux de pompe combinés pendant des durées sensiblement égales.

8. Dispositif selon l'une des revendications 6 et 7, **caractérisé en ce que** ledit module de commande (14) est agencé pour délivrer en alternance les signaux de pompe combinés selon une fréquence supérieure ou égale au kilohertz.

9. Dispositif selon la revendication 8, **caractérisé en ce que** ladite fréquence est de l'ordre de 500 kilohertz.

10. Dispositif selon l'une des revendications 6 à 9, **caractérisé en ce qu'**il est agencé pour délivrer les signaux de pompe combinés (S11+S22, S12+S21) à contre-courant desdits signaux de données.

11. Dispositif selon l'une des revendications 6 à 10, **caractérisé en ce qu'**il comporte:
- un premier multiplexeur de polarisation (10) destiné à être alimenté en continu par les modules d'alimentation (6, 7) fournissant les deux composantes (S11, S12) du premier signal de pompe, ledit premier multiplexeur de polarisation étant agencé pour combiner lesdites composantes du premier signal de pompe pour délivrer alternativement sur une sortie, sur ordre dudit module de commande (14), l'une ou l'autre desdites composantes du premier signal de pompe,
- un deuxième multiplexeur de polarisation (11) destiné à être alimenté en continu par les modules d'alimentation (8, 9) fournissant les deux composantes (S11, S12) du deuxième signal de pompe, ledit deuxième multiplexeur de polarisation étant agencé pour combiner lesdites composantes du deuxième signal de pompe pour délivrer alternativement sur une sortie, sur ordre dudit module de commande (14), l'une ou l'autre desdites composantes du deuxième signal de pompe,
- un multiplexeur en longueur d'onde (12) agencé pour combiner les composantes de signal de pompe délivrés sur les sorties desdits premier (10) et deuxième (11) multiplexeurs de polarisation.

12. Dispositif selon l'une des revendications 6 à 11, **caractérisé en ce que** ledit module d'alimentation comporte des diodes (6-9) propres à délivrer des composantes de signaux de pompe présentant des polarisations rectilignes.

13. Station de réception de signaux optiques (2), comportant un module de réception (5) propre à être raccordé à une première extrémité de fibre optique (3) pour recevoir des signaux optiques de données ([λa - λb]) issus d'une station d'émission (1) raccordée à une deuxième extrémité de ladite fibre optique (3), **caractérisée en ce que** ladite station de réception (2) comporte un dispositif d'amplification (D) selon l'une des revendications 6 à 12.
